## Europäisches Patentamt

## European Patent Office

## Office européen des brevets

(19)

(11) Veröffentlichungsnummer : **0 324 500 B1**

(12)

# EUROPÄISCHE PATENTSCHRIFT

(45) Veröffentlichungstag der Patentschrift :
**08.04.92 Patentblatt 92/15**

(51) Int. Cl.⁵ : **F16H 53/02,** F01L 1/04,
B21D 53/84

(21) Anmeldenummer : **89100549.8**

(22) Anmeldetag : **13.01.89**

(54) **Zusammengesetzte Welle mit integrierten Antriebselementen.**

(30) Priorität : **14.01.88 DE 3800914**

(43) Veröffentlichungstag der Anmeldung :
**19.07.89 Patentblatt 89/29**

(45) Bekanntmachung des Hinweises auf die
Patenterteilung :
**08.04.92 Patentblatt 92/15**

(84) Benannte Vertragsstaaten :
**BE CH DE ES FR GB IT LI NL SE**

(56) Entgegenhaltungen :
**EP-A- 0 170 378
EP-A- 0 257 175
EP-A- 0 265 663
GB-A- 2 050 207
GB-A- 2 164 420
PATENT ABSTRACTS OF JAPAN, Band 9, Nr.
34 (M-357)[1757], 14. Februar 1985; & JP-A-59
176 407 (RIKEN K.K.) 05-10-1984**

(73) Patentinhaber : **Emitec Gesellschaft für
Emissionstechnologie mbH
Hauptstrasse 150
W-5204 Lohmar 1 (DE)**

(72) Erfinder : **Maus, Wolfgang
Gut Horst
W-5060 Bergisch Gladbach 1 (DE)**
Erfinder : **Swars, Helmut
Riedweg 11
W-5060 Bergisch Gladbach 1 (DE)**

(74) Vertreter : **Neumann, Ernst Dieter, Dipl.-Ing.
HARWARDT NEUMANN PATENTANWÄLTE
Scheerengasse 2 Postfach 1455
W-5200 Siegburg (DE)**

**Beschreibung**

Die vorliegende Erfindung betrifft eine Antriebswelle nach dem Oberbegriff des 1. Anspruchs. In der EP-A-0 213 529 wird ein Verfahren zum Befestigen von Antriebselementen, wie Nocken, Zahnrädern oder Lagerschalen auf einer Hohlwelle vorgeschlagen, bei der diese aus einem handelsüblichen Rohr besteht, auf die die Elemente aufgeschoben werden, worauf sie durch Aufweiten der darunterliegenden Abschnitte des Rohres auf demselben befestigt werden, wobei der Werkstoff des Rohres selbst plastisch, derjenige der Antriebselemente jedoch nur elastisch verformt wird, so daß durch die Rückfederung des letzteren ein fester Sitz auf der Welle erzielt wird. In den nicht veröffentlichten DE-A-36 33 435 und DE-A-37 17 516 werden darüber hinaus Bemessungsregeln angegeben, nach denen in Abhängigkeit von den Werkstoffeigenschaften von Rohr und Antriebselementen, insbesondere von deren Elastizitätsmodul und Streckgrenze die geometrischen Bedingungen, z.B. der Rohrinnen- wie Rohraußendurchmesser festzulegen sind, um einen drehfesten, kraftschlüssigen Verbund zwischen den Teilen herzustellen. Es hat sich gezeigt, daß bei der Anwendung der Erfindung insbesondere auf Nockenwellen von Kraftfahrzeugmotoren die nach diesen Bemessungsregeln erforderlichen Abmessungen der Teile aus konstruktiven oder Gewichtsgründen nicht immer zur Verfügung gestellt werden können. In einigen Anwendungsfällen, insbesondere bei Nockenwellen von Kraftfahrzeugmotoren besteht darüber hinaus das Bedürfnis, mittels des beschriebenen Verfahrens auch Antriebselemente aus einem spröden und wenig elastischen Werkstoff, z.B. aus Temperguß, auf den Wellen befestigen zu können. In der gleichfalls nicht vorveröffentlichten DE-U-87 13 285 wird vorgeschlagen, derartige Antriebselemente mit axial unterschiedlichen Werkstoffeigenschaften auszustatten, z.B. indem nur Teile derselben Härtungsprozessen unterzogen werden und die Aufweitung nur in denjenigen Bereichen der durchgehenden Hohlwelle vorzunehmen, die den duktilen Bereichen der Antriebselemente gegenüberliegen. Für die Befestigung von Antriebselementen, die insgesamt aus einem wenig elastischen Werkstoff bestehen, eignet sich dieser Vorschlag weniger.

Aus der JP-A-59-176 407 ist es bekannt, eine Antriebswelle wie in der eingangs genannten Veröffentlichung beschrieben herzustellen, bei der in die aufgeschobenen Antriebselemente innenverzahnte Hülsen aus Stahl eingeschoben werden, die die Belastung der Antriebselemente beim Aufweiten des Rohrkörpers reduzieren. Der Gedanke einer aus einzelnen Abschnitten zusammengesetzten Antriebswelle kommt hierbei nicht zu tragen.

Aus der EP-A-0 170 378 ist eine gattungsgemäße Antriebswelle bekannt, bei der massive Abschnitte aus Keramik die Antriebselemente umfassen und daran befestigte Endzapfen in metallische Rohrabschnitte eingesteckt sind. Hierbei ist das spröde Keramikmaterial keinerlei Zugspannungen ausgesetzt. Aufgrund der massiven Ausführung ist ein Gewichtsvorteil nicht zu erzielen.

Aufgabe der vorliegenden Erfindung ist eine Ausgestaltung einer Antriebswelle der zuletzt beschriebenen Art, die aus einzelnen axialen Abschnitten zusammengefügt ist, die unterschiedliche Werkstoffeigenschaften aufweisen. Insbesondere sollen Antriebselemente aus sprödem, wenig elastischem Werkstoff verwendet werden können, die einem Fügen durch elastisches Rückfedern auf einen plastisch verformten Wellenkörper weniger zugänglich sind.

Die Lösung dieser Aufgabe erfolgt durch die im kennzeichnenden Teil des 1. Anspruchs vorgeschlagene Ausgestaltung. Ein Teil der Hohlwelle wird gewissermaßen durch Teile der Antriebselemente selbst ersetzt, so daß zwar einerseits zwei oder mehr Antriebselemente zu einer Einheit zusammengefaßt werden können (wodurch sich die Anzahl der durch Aufweiten herzustellenden Verbindungsstellen reduziert), andererseits jedoch das zusätzliche Gewicht der Verbindungshülsen zwischen den zusammengefaßten Antriebselementen eingespart wird.

Der 2. und 3. Anspruch bezeichnen Alternativen der Fügetechnik, mit der die erfindungsgemäße Welle herstellbar ist. Die hier vorgeschlagene Konstruktion eignet sich nicht nur für das in den oben angegebenen Druckschriften beschriebene Verfahren des Befestigens durch plastisches Aufweiten des innen gelegenen und durch elastisches Aufweiten des außen gelegenen Partners der Verbindung, sondern auch für das an sich bekannte Verfahren, bei dem die Antriebselemente in erhitztem Zustand auf die Hohlwelle geschoben werden und die beim Erkalten auftretenden Schrumpfspannungen für einen ausreichend festen Sitz auf der Welle sorgen sollen.

Die erfindungsgemäße Ausgestaltung sichert eine ausreichend feste Verbindung auch für eine Paarung aus einem inneren, duktilen Partner und einem äußeren, wenig elastischen Partner. Die dazugehörige Werkstoffauswahl erfolgt unter Berücksichtigung der oben angesprochenen Bemessungsregeln und selbstverständlich unter Berücksichtigung der sonstigen, an das Bauteil zu stellenden Forderungen.

Als weitere Alternative kommt für die Verbindung der ersten und zweiten Abschnitte der Hohlwelle auch ein Stoffschluß in Frage, z.B. durch Hochtemperaturlöten.

Eine geeignete Werkstoffauswahl erlaubt es, auf besondere, als Partner in Gleit- oder Wälzlagern wirkende Lagerschalen zu verzichten, diese Funktion vielmehr hierfür geeigneten Teilen der Welle selbst zu übertragen.

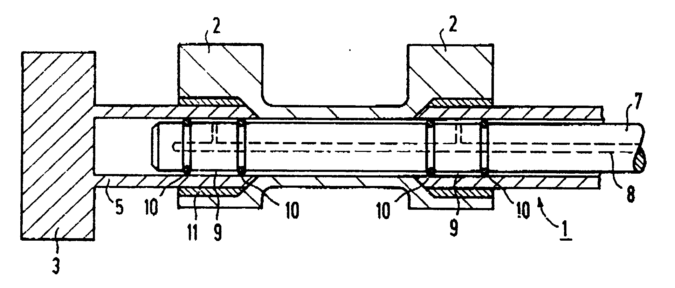

Ein Ausführungsbeispiel der Erfindung ist in der Zeichnung dargestellt, und zwar in Längsaxialschnitt.

Die als Beispiel gewählte Nockenwelle 1 besteht aus ersten Abschnitten 5 in Form von Stücken aus einem handelsüblichen Präzisionsstahlrohr und aus zweiten beschnitten 2, 3; letztere können die Form von Doppelnocken 2 aufweisen, die durch eine sie verbindende, einstückig mit ihnen ausgeführte Hülse verbunden werden, die in ihrem Innendurchmesser zweckmäßigerweise demjenigen der Rohrstücke 5 entspricht und voh der Wanddicke her so gewählt ist, daß unter Berücksichtigung der unterschiedlichen Werkstoffeigenschaften die gesamte Welle 1 über ihre Länge gesehen eine gleichmäßige Festigkeit aufweist. Auch Endstücke 3 können in ähnlicher Weise ausgestaltet und mit den Rohrstücken 5 verbunden sein, um den Vorteil der Gewichtsersparnis durch Fortfall von unnötigen Dopplungen ganz zu realisieren. Nocken 2 und Endstücke 3 können die zur optimalen Ausfüllung ihrer Funktion erforderlichen Werkstoffeigenschaften aufweisen, z.B. aus einem verhältnismäßig spröden Werkstoff wie Temperguß hergestellt sein. In einem solchen Falle empfiehlt sich die Anordnung von Zwischenschichten 11 aus einem Werkstoff mit hohem Elastizitätsmodul, um einerseits einen ausreichend festen Sitz des äußeren Partners 2 auf dem inneren 5 zu gewährleisten, ersteren andererseits aber keinen unzulässig hohen Zugspannungen auszusetzen. Die äußeren Oberflächen der Rohrstücke 5 und-/oder der Nocken 2 bzw. der Endstücke 3 können bei geeigneter Werkstoffwahl so bearbeitet werden, daß sie unmittelbar als Partner in Gleit- oder Wälzlagern eingesetzt werden können. Die Verbindung der verschiedenen Teile miteinander geschieht zweckmäßigerweise dadurch, daß in das Innere der Hohlwelle eine hydraulische Drucksonde 7 eingeführt wird, in deren Innerem über einen mit Abzweigungen versehenen Kanal 8 Druckfluid Aufweitbereichen 9 zugeführt werden kann, die axial durch Ringdichtungen 10 begrenzt werden. Dabei werden die entsprechenden Bereiche der Rohrstücke 5 plastisch, die Nocken 2 und der Endflansch 3 (ggfs. vermittelt durch die Zwischenschicht 11) jedoch nur im elastischen Bereich verformt, so daß sie nach Beendigung des Aufweitvorganges zurückfedern und so einen festen, kraftschlüssigen Verbund zwischen den Teilen schaffen. Die verschiedenen Teile können auch stoffschlüssig miteinander verbunden sein, in welchem Fall das bislang als Zwischenschicht bezeichnete Teil 11 z.B. eine Lötstelle darstellen würde.

## Patentansprüche

1. Hohlwelle (1) mit Antriebselementen (2, 3), bestehend aus einzelnen rohrförmigen ersten Abschnitten (5), die mit zweiten Abschnitten (2, 3) verbunden sind, die einstückig mit den Antriebselementen ausgeführt sind,
dadurch gekennzeichnet,
daß die ersten Abschnitte (5) aus einem duktilen Werkstoff bestehen, daß die zweiten Abschnitte (2) ebenfalls rohrförmig sind und aus einem spröden Werkstoff bestehen, daß die ersten Abschnitte (5) in die zweiten Abschnitte (2) mit überlappenden Teilen eingesteckt sind und daß zwischen den einander überlappenden Teilen der ersten und zweiten Abschnitte (5, 2) eine Zwischenschicht (11) aus einem Werkstoff mit hohem Elastizitätsmodul angeordnet ist.

2. Hohlwelle (1) nach Anspruch 1,
dadurch gekennzeichnet,
daß die ersten und zweiten Abschnitte (5, 2) durch plastisches Aufweiten der eine (5) in die elastisch verformten anderen (2) verbunden sind.

3. Hohlwelle (1) nach Anspruch 1,
dadurch gekennzeichnet,
daß die ersten und zweiten Abschnitte (5, 2) durch Aufschrumpfen der einen (2) auf die anderen (5) verbunden sind.

4. Hohlwelle (1) nach Anspruch 1,
dadurch gekennzeichnet,
daß die ersten und zweiten Abschnitte (5, 2) durch Stoffschluß (11) miteinander verbunden sind.

5. Hohlwelle (1) nach Anspruch 1,
dadurch gekennzeichnet,
daß die ersten Anschnitte (5) und/oder die zweiten Abschnitte (2, 3) eine Werkstoff- und Oberflächenbeschaffenhat aufweisen, die den Anforderungen an eine Lagerstelle genügt.

## Claims

1. A hollow shaft (1) having drive elements (2, 3) and consisting of individual tubular first portions (5) which are connected to second portions (2, 3) produced so as to be integral with the drive elements,

characterised in
that the first portions (5) consist of a ductile material, that the second portions (2) are also tubular and consist of a brittle material, that the first portions (5) are inserted into the second portions (2) via overlapping parts and that between the overlapping parts of the first and second portions (5, 2) there is arranged an intermediate layer (11) consisting of a material with a high modulus of elasticity.

2. A hollow shaft (1) according to claim 1,
characterised in
that the first and second portions (5, 2) are connected by plastically expanding the first portions (5) into the elastically deformed second portions (2).

3. A hollow shaft (1) according to claim 1,
characterised in
that the first and second portions (5, 2) are connected by shrinking the second portions (2) on to the first portions (5).

4. A hollow shaft (1) according to claim 1,
characterised in
that the first and second portions (5, 2) are connected via a material locking connection (11).

5. A hollow shaft (1) according to claim 1,
characterised in
that the material condition and surface condition of the first portions (5) and/or second portions (2, 3) meet the requirements specified for a bearing region.


**Revendications**

1. Arbre creux (1) muni d'éléments d'entraînement (2, 3), consistant en des premiers segments tubulaires isolés (5) qui sont reliés à des seconds segments (2, 3) qui sont solidaires des éléments d'entraînement, caractérisé en ce que
les premiers segments (5) consistent en un matériau ductile, en ce que les seconds segments (2) sont eux aussi tubulaires et consistent en un matériau fragile, en ce que les premiers segments (5) sont insérés dans les seconds segments (2) avec des parties chevauchantes et en ce qu'une couche intermédiaire (11) en un matériau à haut module d'élasticité est disposée entre les parties mutuellement chevauchantes des premiers et seconds segments (5, 2).

2. Arbre creux (1) selon la revendication 1,
caractérisé en ce que
les premiers et seconds segments (5, 2) sont reliés par élargissement plastique des uns (5) dans les autres (2) déformés élastiquement.

3. Arbre creux (1) selon la revendication 1,
caractérisé en ce que
les premiers et seconds segments (5, 2) sont reliés par emmanchement par frettage des uns (2) sur les autres (5).

4. Arbre creux (1) selon la revendication 1,
caractérisé en ce que
les premiers et seconds segments (5, 2) sont reliés entre eux par assemblage de matière (11).

5. Arbre creux (1) selon la revendication 1,
caractérisé en ce que
les premiers segments (5) et/ou les seconds segments (2, 3) présentent des caractéristiques de matériau et de surface qui répondent aux conditions posées pour un point d'appui.